(19) Europäisches Patentamt
European Patent Office
Office européen des brevets

(11) EP 0 548 821 B1

(12) **EUROPÄISCHE PATENTSCHRIFT**

(45) Veröffentlichungstag und Bekanntmachung des Hinweises auf die Patenterteilung:
**01.07.1998 Patentblatt 1998/27**

(51) Int. Cl.$^6$: **C07F 7/08**, C03C 17/00, B01J 39/00, B01J 31/08

(21) Anmeldenummer: **92121536.4**

(22) Anmeldetag: **18.12.1992**

(54) **Verfahren zur Herstellung von sulfonierten Organosiliciumverbindungen und entsprechenden wässrigen Lösungen**

Process for the preparation of sulfonated organosilicon compounds and aqueous solutions obtained

Procédé pour la préparation de composés organosiliciques sulfonés et des solutions aqueuses obtenus

(84) Benannte Vertragsstaaten:
**AT BE CH DE ES FR GB IE IT LI LU NL PT SE**

(30) Priorität: **20.12.1991 DE 4142129**

(43) Veröffentlichungstag der Anmeldung:
**30.06.1993 Patentblatt 1993/26**

(73) Patentinhaber:
**Degussa Aktiengesellschaft**
**60311 Frankfurt (DE)**

(72) Erfinder:
- **Panster, Peter, Dr.**
  **W-6458 Rodenbach (DE)**
- **Jänes, Arno**
  **W-6467 Hasselroth 2 (DE)**
- **Göbel, Thomas, Dr.**
  **W-6450 Hanau 9 (DE)**

(56) Entgegenhaltungen:
**EP-A- 0 098 946** **FR-A- 2 139 097**
**FR-A- 2 422 672**

- **CHEMICAL ABSTRACTS, vol. 82, 1975, Columbus, Ohio, US; abstract no. 43503b, VLASOVA, N.N. ET AL. Seite 450 ;**

EP 0 548 821 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft wäßrige Lösungen von sulfonierten Organosiliciumverbindungen, welche als Ausgangsmaterial z. B. für unlösliche Säurekatalysatoren oder zur Oberflächenmodifizierung von anorganischen Materialien verwendet werden können. Das neue Verfahren zeichnet sich dadurch aus, daß es einerseits äußerst ökonomisch sowie ökologisch verträglich ist und andererseits die Herstellung von wäßrigen Lösungen ermöglicht, welche außer der sulfonierten Wirkkomponente kein weiteres organisches Produkt enthalten.

Sulfonierte Organosiliciumverbindungen werden in unlöslicher Form, wie in der deutschen Patentschrift DE 32 26 093 beschrieben, insbesondere als Ionenaustauscher und fester Säurekatalysator eingesetzt (vgl. auch Acid-Base catal., Proc. Int. Symp. 1988, 379 - 396 edited by K. Tanabe, Tokyo, authors Y. Ono and S. Suzuki).

In löslicher Form, bevorzugt als wäßrige Lösungen, werden derartige Verbindungen als Emulgierungsmittel, zur Herabsetzung der Oberflächenspannung wäßriger Medien oder zur Oberflächenmodifizierung anorganischer Phasen, z. B. zur Herstellung von Chromatographiephasen, verwendet.

In der Literatur sind verschiedene Verfahren zur Herstellung löslicher sulfonierter Organosiliciumverbindungen, Silane und Siloxane, beschrieben. Die Patentschriften GB 1 270 977 und GB 1 198 096 beschreiben z. B die Herstellung sulfonierter Organosiliciumverbindungen durch Umsetzung des entsprechenden epoxydierten Silans oder Siloxans mit einem Aminsulfonat oder mit Natriumbisulfit. Die britische Patentschrift 1 005 872 beschreibt die Herstellung von sulfonierten Organosiliciumverbindungen, welche durch Umsetzung der entsprechenden ungesättigten Organosiliciumverbindungen mit einem Alkalimetallbisulfit oder einem Alkalimetall-pyrosulfit erhalten werden. Im Fall der britischen Patentschrift 1 030 888 wird eine Mercaptoethylsiliciumverbindung mit Natriumethoxid und anschließend mit einer Hydroxypropansulfonsäure umgesetzt. Gemäß der deutschen Offenlegunsschrift 38 08 174 werden sulfongruppenhaltige Organosilane und Organosiloxane durch Oxidation der entsprechenden mercaptopropylsubstituierten Ausgangsverbindungen mit Natriumpermanganat erhalten.

Diese bekannten Verfahren haben Jedoch verschiedene Nachteile. Die hierzu benötigten Reaktanden sind entweder teuer oder nicht ohne weiteres erhältlich . Das Verfahren der GB 1 005 872 muß zudem bei hohen Drucken durchgeführt werden und im Fall der DE-OS 38 08 174 fällt als Nebenprodukt Manganoxid an, das aufwendig abgetrennt und entsorgt werden muß.

Aus der FR-A-2422 672 sind wässrige Lösungen von Sulfonato-organosilanolverbindungen bekannt. Sie werden durch die Behandlung verschiedener Silanvorstufen mit Alkalisulfit- oder Alkalisulfitlösungen erhalten. Als weitere Möglichkeit zur Herstellung wird die Oxydation einer Merkaptogruppe enthaltenden Vorstufe mit $KMnO_4$ beschrieben.

Gegenstand der Erfindung ist nun ein Verfahren zur Herstellung von löslichen sulfonierten Organosilicium-verbindungen und entsprechenden wäßrigen Lösungen, nach dem diese Produkte ökonomisch und ökologisch rationell in wasser, das keine zusätzlichen organischen Komponenten enthält, hergestellt werden können.

Gleichzeitig enthalten die nach diesem neuen Verfahren hergestellten Endprodukte neben der sulfonierten Organosiliciumverbindung als Wirkkomponente nur noch Wasser als Lösungsmittel und keine organischen Nebenbestandteile, wie z. B. Alkohol. Das erfindungsgemäße Verfahren basiert auf der Oxidation eines Disulfan-, Trisulfan- oder Tetrasulfangruppen enthaltenden Organopolysiloxans mit $H_2O_2$ oder anorganischen oder organischen Persäuren oder Hypobromit. Derartige Polysiloxane sind in der deutschen Patentschrift 32 26 091 beschrieben. Die Oxidation dieser polymeren Siliciumverbindungen mit Hilfe von $H_2O_2$ ist zwar schon in der deutschen Patentschrift 32 26 093 beschrieben, doch wurden dabei stets nur unlösliche Sulfonatgruppenhaltige Polysiloxane stöchiometrisch nicht definierter Zusammensetzung erhalten.

Es wurde jetzt gefunden, daß bei dieser Oxidation in praktisch quantitativem Umfang lösliche sulfonierte Organosiliciumverbindungen mit definierter stöchiometrischer Zusammensetzung erhalten werden können, wenn die erfindungsgemäßen Reaktionsbedingungen eingehalten werden.

Gegenstand der Erfindung ist somit ein Verfahren zur Herstellung von 0,01 bis 70 Gew.-%igen wäßrigen Lösungen sulfonierter Organosiliciumverbindungen der Formel

$$[(HO)_3Si\text{-}R^1\text{-}SO_3^-]_xM^{x+} \qquad (I)$$

bzw. über Sauerstoffbrücken kondensierter Siloxanderivate davon,
wobei $R^1$ eine lineare oder verzweigte Alkylengruppe mit 1 bis 12 C-Atomen, eine Cycloalkylengruppe mit 5 bis 8 C-Atomen oder eine Einheit der allgemeinen Formel

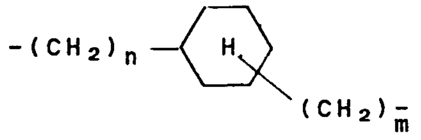 oder 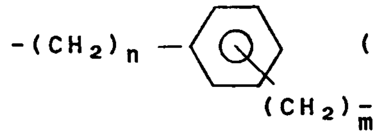 (II)

darstellt, in der n bzw. m eine Zahl von 0 bis 6 ist und die Zahl der silicium- bzw. schwefelständigen Methylengruppen angibt,
M gleich $H^+$ oder $NH_4^+$ oder ein Metallion mit einer Wertigkeit von x gleich 1 bis 4 ist,
und in der Lösung gegebenenfalls noch Verbindungen der Formel

$$Si(OH)_4,\ R'Si(OH)_3,\ R'_2\,Si(OH)_2 \text{ und/oder } Al(OH)_3,\ R'Al(OH)_2 \qquad \text{(III)}$$

oder kondensierte Derivate davon enthalten sind, wobei R' eine Methyl- oder Ethylgruppe ist und das Verhältnis von Si-Atomen aus Einheiten der Formel (I) zu der Summe der Si- und/oder Al-Atome aus Einheiten der Formel (III) 1 : 0 bis 1 : 3 und die Gesamtkonzentration der Verbindungen (I) plus (III) 0,01 bis 70 Gew.-% beträgt. Das Verfahren ist dadurch gekennzeichnet, daß man eine polymere Di-, Tri- oder Tetrasulfan-Verbindung aus Einheiten der allgemeinen Formel

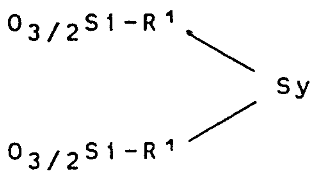 (IV)

in welcher $R^1$ jeweils gleich oder verschieden sein kann und dieselbe Bedeutung wie in Formel (I) hat,
y gleich 2, 3, 4 ist und die freien Valenzen der an das Siliciumatom gebundenen Sauerstoffatome durch die Siliciumatome weiterer Gruppen der Formel (IV) und/oder durch die Metallatomsauerstoffgruppen der vernetzenden Brückenglieder

$$SiO_{4/2},\ R'SiO_{3/2},\ R'_2\,SiO_{2/2} \text{ und/oder } AlO_{3/2},\ R'AlO_{2/2} \qquad \text{(V)}$$

abgesättigt sind, wobei R' wie in Formel (III) eine Methyl- oder Ethylgruppe ist und das Verhältnis von Si-Atomen aus Einheiten der Formel (IV) zu der Summe der Si- und/oder Al-Atome aus Einheiten der Formel (V) 1 : 0 bis 1 : 3 beträgt, in einer Konzentration von 0,1 bis 50 Gew.-% in Wasser suspendiert, die Suspension bei einer Temperatur von 10 bis 100° C, über einen Zeitraum von 2 bis 20 Stunden mit der stöchiometrisch erforderlichen oder einer überschüssigen Menge Wasserstoffperoxid, bezogen auf Einheiten der Formel (IV), in Form einer 1 bis 70 Gew.-%igen Lösung versetzt, die Suspension anschließend über einen Zeitraum bis zu 60 Stunden bei einer Temperatur von 30 bis 100° C und bis zu weiteren 60 Stunden bei einer Temperatur von 100 bis 150° C bei Normaldruck oder gegebenenfalls einem Überdruck, welcher der Summe der Partialdrucke der Komponenten der Mischung bei der jeweiligen Temperatur entspricht, rührt, bis eine weitgehend klare Lösung entstanden ist, und gegebenenfalls vorhandenes überschüssiges Wasserstoffperoxid zersetzt ist, dann die Lösung abkühlt und gegebenenfalls mit Ammoniak, einem Amin, einem wasserlöslichen Metalloxid, -hydroxid, -hydrogencarbonat oder -carbonat oder wäßrigen Lösungen davon zum Zwecke der Neutralisation des weitgehend quantitativ gebildeten Sulfonats der Formel (I) und gegebenenfalls vorhandener Schwefelsäure versetzt, anschließend gegebenenfalls in geringer Menge vorhandene unlösliche Bestandteile durch Filtrieren oder Zentrifugieren abtrennt, den verbliebenen Rückstand mit Wasser wäscht und dann in der mit der Waschflüssigkeit vereinigten Produktlösung durch Hinzufügen oder destillatives Entfernen von Wasser die gewünschte Konzentration an sulfonierter Organosiliciumverbindung im bereits genannten Bereich von 0,01 bis 70 Gew.-% einstellt.

Überraschenderweise wurde bei dieser Verfahrensweise gefunden, daß die Reaktion quantitativ, z. B. im Fall des Disulfans gemäß der Reaktionsgleichung

$$[O_{3/2}Si\text{-}R^1]_2S_2 + 5\,H_2O_2 \rightarrow 2(HO)_3Si\text{-}R^1\text{-}SO_3H + H_2O \qquad (1)$$

abbläuft, d. h. daß keine Nebenreaktionen, die einen oxidativen Abbau der Kohlenwasserstoff-Gruppen oder des Kohlenstoff/Silicium-Gerüstes zur Folge haben, auftreten. Weiterhin überraschend ist auch die Tatsache der weitgehend quantitativen Ausbeute bei der Oxidation mit $H_2O_2$ und der vollständigen Umwandlung der unlöslichen Disulfangruppen-enthaltenden Polysiloxan-Verbindung gemäß Formel (IV) in ein lösliches Produkt gemäß Formel (I).

Die Löslichkeit des Sulfonats gemäß Formel (I) scheint dadurch begünstigt zu werden, daß bei der Oxidation der Disulfangruppen eine sehr hohe Dichte an den gleichartig geladenen Sulfonatgruppen auf dem Siloxangerüst entstünde, wenn nicht die Abstoßung dieser negativen Ladungen dazu führen würde, daß das stets vorhandene Reaktionsgleichgewicht

$$\equiv Si - O - Si \equiv \quad + H_2O \rightleftharpoons 2 \quad \equiv Si-OH \qquad (2)$$

weitgehend auf die rechte Seite verschoben wird. Dabei findet eine Hydrolyse des Polysiloxangerüstes statt und aus der unlöslichen, hochvernetzten Siloxanmatrix entstehen lösliche Organosilantriol-Einheiten.

Bekanntlich können die Einheiten nach Formel (I) in Abhängigkeit von ihrer Konzentration in wäßriger Lösung auch als lösliche Oligomere vorliegen, bei denen mindestens zwei Moleküle über eine Siloxanbrücke miteinander verknüpft sind. Bei einer Erhöhung der Konzentration einer wäßrigen Lösung von Verbindungen der Formel (I) über die als kritisch ermittelte Schranke von 70 Gew.-% hinaus, entstünden indes höhermolekulare Strukturen, die sich als Feststoff aus der Lösung ausscheiden. Dieser Vorgang ist jedoch durch Zusatz von Wasser umkehrbar (reversibel), so daß bei bestimmten Anwendungen dieser sulfonierten Organosiliciumverbindungen prinzipiell auch eine entsprechende Suspension eingesetzt werden kann.

Die ausgeprägte Tendenz sulfonierter Organosiliciumverbindungen zur Bildung löslicher monomerer Verbindungen gemäß Formel (I) oder deren über Sauerstoffbrücken kondensierten Siloxanderivate zeigt sich auch darin, daß neben den Verbindungen gemäß Formel (I) auch nichtorganofunktionelle Verbindungen gemäß Formel (III) in Lösung vorliegen können, welche für sich allein spontan ein unlösliches Netzwerk ausbilden würden. Aufgrund der Anwesenheit der sulfonierten Organosiliciumverbindungen können aber bis zu drei Einheiten (III) pro Einheit (I) in Lösung gehalten werden. Erst bei einem höheren Verhältnis scheiden sich polymere Folgeprodukte der Verbindungen (III) aus entsprechenden Lösungen aus.

Oligomere, d. h. kondensierte Derivate, die im Gleichgewicht zu den entsprechenden Monomeren in Lösung, in Abhängigkeit von z. B. Konzentration, Säuregehalt und Temperatur vorliegen, können z. B. folgende Struktur haben:

$$(HO)_2Si-R^1-SO_3^-H^+$$
$$|$$
$$O$$
$$|$$
$$(HO)_2Si-R^1-SO_3^-H^+$$

In Gegenwart einer gelösten Verbindung der Formel (III) sind auch folgende gemischte oligomere Strukturen anzunehmen:

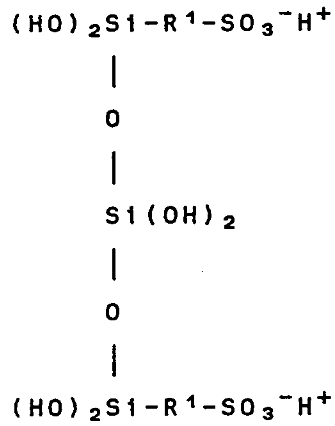

Die Verwendung der stöchiometrischen Menge Wasserstoffperoxid, bezogen auf Einheiten (IV), ist erforderlich, um eine quantitative Umwandlung aller Di-, Tri - oder Tetrasulfangruppen in jeweils zwei Sulfonatgruppen und gegebenenfalls Sulfatgruppen zu ermöglichen. Unterschüssige Mengen $H_2O_2$ oder auch falsche Reaktionsbedingungen äußern sich dadurch, daß nach vollständigem Verbrauch des $H_2O_2$ ein unlöslicher Rückstand verbleibt. Zur Beschleunigung der Umsetzung kann im Einzelfall ein bis zu 10 %iger molarer überschuß an $H_2O_2$ ohne Nachteil für die Produktausbeute angewendet werden. Größere überschüsse können jedoch in manchen Fällen zu Nebenreaktionen führen oder sind mit dem Verbleib von Wasserstoffperoxid im Endprodukt der sulfonathaltigen Lösung verbunden.

Hierbei muß dieses z. B. mittels eines Zersetzungskatalysators oder durch Verkochen oder durch eine chemische Reaktion eigens entfernt werden.

Aufgrund unproblematischer technischer Zugänglichkeit des Ausgangsmaterials sieht eine besonders vorteilhafte Form der erfindungsgemäßen Verfahrensweise vor, als Ausgangsmaterial polymere Di-, Tri- oder Tetrasulfan-Verbindungen, bestehend aus Einheiten der Formel

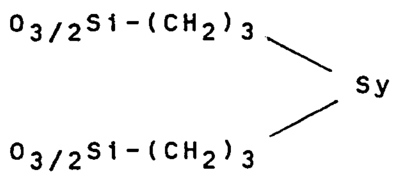

(VI)

einzusetzen, wobei y = 2, 3, 4 ist, die freien Valenzen der an das Siliciumatom gebundenen Sauerstoffatome wiederum durch die Siliciumatome weiterer Gruppen der Formel (VI) und/oder durch Metallatomsauerstoffgruppen der vernetzenden Brückenglieder (V) abgesättigt sind und das Verhältnis von Si-Atomen aus Einheiten der Formel (VI) zu der Summe der Si- und/oder Al-Atome aus Einheiten der Formel (V) 1 : 0 bis 1 : 3 beträgt. Bei dieser besonders vorteilhaften Verfahrensweise werden wäßrige Lösungen sulfonierter Organosiliciumverbindungen der Formel

$$[(HO)_3Si\text{-}(CH_2)_3\text{-}SO_3^-]_xM^{x+} \qquad \text{(VII)}$$

oder in Lösung vorliegender kondensierter Derivate davon erhalten, wobei M gleich $H^+$ oder gegebenenfalls auch $NH_4^+$ oder ein Metallion mit einer Wertigkeit von x gleich 1 bis 4 ist, und in der Lösung noch gelöste Verbindungen der Formel (III) oder kondensierte oligomere Derivate davon enthalten sind, wobei das Verhältnis von Si-Atomen aus Einheiten (VII) zu der Summe der Si- und/oder Al-Atome aus Einheiten (III) 1 : 0 bis 1 : 3 beträgt.

Bei Einsatz von Tri- oder Tetrasulfanen entstehen bei der Oxidation natürlich jeweils zunächst ein oder zwei Mol freie Schwefelsäure, die gegebenenfalls, wie beschrieben, neutralisiert werden können. Daneben ist ein entsprechender Mehrbedarf an $H_2O_2$ erforderlich. Sollten diese freie Schwefelsäure bzw. die daraus gebildeten Sulfate bei der Anwendung der Sulfatlösung stören, so sieht eine bevorzugte Form der Erfindung vor, ein polymeres Disulfan der Formel

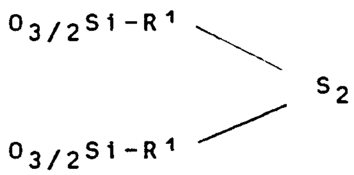

(VIII)

als Ausgangsmaterial einzusetzen, wobei $R^1$ dieselbe Bedeutung wie in Formel (IV) hat und die freien Valenzen der an das Siliciumatom gebundenen Sauerstoffatome durch die Siliciumatome weiterer Gruppen der Formel (IV) und/oder durch vernetzende Brückenglieder der Formel (V) abgesättigt sind.

Natürlich ist unter diesen Disulfanen aufgrund der technischen Verfügbarkeit das Disulfan der Formel

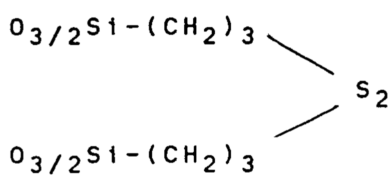

(IX)

als Ausgangsmaterial für die Sulfonatlösung bevorzugt.

Das Wasser, in dem das zu oxidiernde Polysiloxansulfan suspendiert wird, hat vorzugsweise einen pH-Wert von 3 bis 9.

Im Einzelfall kann jedoch auch ein höherer oder niedriger pH-Wert eingestellt werden, wobei jedoch bei einem höheren pH-Wert $H_2O_2$ zersetzt werden kann und bei einem niedrigen pH-Wert eine langsamere Oxidation stattfindet. Den pH-Wert kann man auch bei der Oxidation in einem Bereich von 3 bis 9 konstant halten, indem man das sich bildende Sulfonat laufend mit Amin, Ammoniak, wasserlöslichem Metalloxid, -hydroxid, -hydrocarbonat, -carbonat oder wäßrigen Lösungen davon neutralisiert und so am Ende der Oxidation eine Lösung eines Sulfonats der Formel (I) erhält, in der M nicht für H steht. Diese Verfahrensweise kann dann praktiziert werden, wenn die Oxidation in der sich bildenden sulfonsauren Lösung zu langsam läuft. Eine langsame Oxidation ist jedoch insoweit günstig, als keine unerwünschten Nebenreaktionen auftreten.

Die Konzentration des Ausgangsmaterials nach Formel (IV) in Wasser kann insgesamt in dem angegebenen Bereich von 0,1 bis 50 Gew.-% liegen. Im Hinblick auf eine hohe Raum-/Zeitausbeute ist jedoch eine möglichst hohe Konzentration anzustreben, welche nach oben durch die Rührfähigkeit der Suspension und die Exotherme der Reaktion begrenzt wird. Als ein besonders günstiger Bereich, der als ein Kompromiß alle Aspekte berücksichtigt, hat sich eine Ausgangskonzentration von 10 bis 35 Gew.-% erwiesen. Dabei wird bevorzugt mit großtechnisch verfügbarem ca. 35 %igen Wasserstoffperoxid oxidiert, für dessen Konzentrationswahl analoge Aspekte wie im Fall der Feststoffkonzentration und daneben auch Selektivitätsaspekte zu berücksichtigen sind.

Nach einer vorzugsweisen Variante der Erfindung kann man zur Oxidation eine, bezogen auf die Umwandlung aller im Ausgangspolysiloxan vorhandenen Schwefelatome in Sulfonat- und gegebenenfalls Sulfonateinheiten, stöchiometrische bis zu 10 Mol % Überschuß betragende Menge Wasserstoffperoxid einsetzen.

Der Temperaturbereich von 10 - 100° C, bei dem die Zugabe des Wasserstoffperoxids erfolgt, ist deshalb günstig, weil einerseits eine zu langsame Reaktion und andererseits eine zu rasche, unkontrollierte Reaktion, die mit der Zersetzung von $H_2O_2$ verbunden ist, vermieden werden soll. Grundsätzlich muß eine Mindesttemperatur gewährleistet sein, damit bereits während der $H_2O_2$-Zugabe eine Abreaktion stattfindet. Ein Temperaturbereich von 40 bis 80° C hat sich hierbei bewährt. Nach kurzem Aufheizen kann dieser Bereich über die Dosiergeschwindigkeit und die Intensität der Kühlung, die bei dieser exothermen Reaktion erforderlich ist, gut eingehalten werden. Bei der anschließenden Nachreaktion läßt die Exothermie langsam nach und ihrem Ende zu muß von außen Energie zugeführt werden. Die abschließende, bis zu 60-stündige Umsetzung bei 30 bis 150° C dient einer Vervollständigung der Reaktion und einer Zerstörung von überschüssigem Wasserstoffperoxid, wobei in der Regel bevorzugt bei Rückflußtemperatur unter Normaldruck gearbeitet wird.

Wenn bei der Oxidation keine Basen zugesetzt werden, wird gemäß Gleichung (1) primär das freie Sulfonat erhalten, das ohne weitere chemische Behandlung, gegebenenfalls nach einer Filtration und/oder Aufkonzentration oder Verdünnung der anschließenden Verwendung zugeführt wird.

Sofern es die spezielle Verwendung der Lösung erforderlich macht, kann natürlich auch zusätzlich eine flüssige, feste oder gasförmige anorganische oder organische Säure in der sulfonathaltigen Lösung gelöst werden.

Bei einer teilweisen oder vollständigen Neutralisation kann die in gasförmiger, flüssiger oder fester Form vorliegende Base auf einmal oder in Chargen zugegeben werden, wobei natürlich die Freisetzung von Neutralisationswärme zu berücksichtigen ist. Sofern die Sulfonatlösung basisch eingestellt werden soll, kann auch ein Überschuß an Base zugesetzt werden.

Bei den unslöslichen Bestandteilen, die nach der Oxidation in der Sulfonatlösung in geringen Mengen verbleiben, handelt es sich vor allem um Verunreinigungen, die sich häufig bereits im Ausgangspolysiloxan gemäß Formel (IV) befinden. Die Abtrennung dieses unlöslichen Feststoffs ist einfach nach den gängigen Techniken des Filtrierens oder Zentrifugierens möglich. Die Aufkonzentration der z. B. nach einer Filtration erhaltenen Lösung kann natürlich auch unter Vakuum erfolgen.

Das in erster Linie beanspruchte Oxidationsmittel $H_2O_2$, das aufgrund seines umweltfreundlichen Charakters als besonders geeignet angesehen wird, ist prinzpiell durch verwandte Perverbindungen, wie gegebenenfalls in situ gebildete organische Persäuren, Peroxomono- oder Peroxodisulfate, Peroxomono- oder Peroxodischwefelsäure oder auch $Br_2$-Wasser (Hypobromit) und dergl. zu ersetzen.

Die polymere Disulfanverbindung gemäß Formel (IV) kann auch mittelbar vor der Oxidation im Rahmen einer Eintopfreaktion durch Hydrolyse und Kondensation eines geeigneten Monomers gemäß DE-PS 32 26 091 in situ gebildet, durch Waschen mit Wasser von herstellungsbedingten Nebenprodukten befreit und dann wasserfeucht oder zumindest ungetrocknet, der Oxidation unterworfen werden. Nach der Entfernung des dabei freiwerdenden Alkohols kann erfindungsgemäß weiter verfahren werden.

Im Fall der Verwendung von Tri- oder Tetrasulfanen der Formel (IV) oder (VI) als Ausgangsmaterial kann die bei der Oxidation gebildete freie Schwefelsäure natürlich auch in Form eines schwerlöslichen Sulfats aus der wäßrigen, die sulfonierte Organosiliciumverbindung enthaltende Lösung abgetrennt werden. Zur Ausfällung dieser schwerlöslichen Sulfate bietet sich der Zusatz von z. B. Verbindungen des Calciums, Strontiums oder Bariums an.

Die hergestellten Sulfonatlösungen stellen transparente, z. T. kolloidale, farblose bis leicht hellgelb gefärbte Flüssigkeiten mit einer Dichte von ca. 1,0 bis 1,3 dar.

Die Erfindung wird nachfolgend anhand von Ausführungsbeispielen unter Berücksichtigung der grundsätzlich wichtigsten Ausgangsstoffe näher erläutert.

Beispiel 1

1,5 kg (3,16 Mol) $S_2[(CH_2)_3Si(OC_2H_5)_3]_2$ wurden mit 1,5 l Ethanol in einem 10 l Glaskolben mit KPG-Rührer, Tropftrichter und Rückflußkühler vereinigt. Die Mischung wird auf 50° C aufgeheizt und unter Rühren mit 600 g 0,1 n wäßriger HCl-Lösung versetzt. Die nahezu klare Lösung erwärmt sich sofort auf über 60° C und innerhalb von 5 Min. geliert die Mischung. Nach Zusatz von 2 l Wasser wird die Suspension 2 Stunden unter Rückfluß gerührt, dann auf 50° C abgekühlt und die flüssige Phase über ein Tauchrohr mit Siebvorrichtung abgetrennt.

Der verbliebene Feststoff wird 4 mal mit je 2 l Wasser gewaschen und dann mit 1700 ml Wasser und 800 g 35 %iger Wasserstoffperoxid-Lösung versetzt. Die Suspension wird zunächst 3 Stunden bei 40 - 50° C gerührt und dann innerhalb von 4 Stunden mit weiteren 800 g 35 %iger Wasserstoffperoxid-Lösung versetzt. Es wurde weitere 4 Stunden bei 60° C und dann 4 Stunden bei ca. 100° C gerührt. Die nahezu transparente Lösung wurde über ein 2 l Seitz-Druckfilter abfiltriert. Die erhaltene Lösung war 1,355 normal an $Si(OH)_3$-$(CH_2)_3$-$SO_3H$. Die Oxidationsausbeute betrug ca. 98 % (bez. auf intermediär gebildetes polymeres Disulfan).

Beispiel 2

200 g (0,271 Mol) der gemäß Beispiel 1 hergestellten $Si(OH)_3$-$(CH_2)_3$-$SO_3H$-haltigen Lösung wurden binnen 5 Min. mit 271 ml 1 n NaOH-Lösung unter Rühren versetzt. Anschließend wurde der pH-Wert der Lösung mit ca. 7 bestimmt. Es wurden ca. 475 g einer Lösung mit insgesamt 271 mMol $Si(OH)_3$-$(CH_2)_3$-$SO_3Na$ erhalten.

Beispiel 3

100 g (0,203 Mol) $S_2[(CH_2)_3SiO_{3/2}]_2 \cdot 4SiO_2$ mit einer mittleren Korngröße von 50 µm wurden in 300 ml Wasser suspendiert. Die Suspension wurde auf 70° C aufgeheizt und unter kräftigem Rühren binnen 10 Stunden mit 98,6 g (1,015 Mol) 35 %iger Wasserstoffperoxidlösung versetzt. Die noch wenig Feststoff-enthaltende Suspension wurde anschließend noch 5 Stunden bei 100° C gerührt, dann abgekühlt und filtriert. Der auf dem Filter verbliebene Feststoffanteil (ca. 1 g Trockenprodukt) wurde mit zweimal 50 ml Wasser gewaschen.

Nach Vereinigung von Filtrat und Waschflüssigkelt wurde die erhaltene Lösung durch Zugabe von Wasser auf 500 ml aufgestockt. Die Titration dieser Lösung mit 0,1 n NaOH-Lösung ergab einen Gehalt an
$2Si(OH)_4 \cdot Si(OH)_3$-$(CH_2)_3$-$SO_3H$ von 0,78 Mol/l (Oxidationsausbeute: 96 %).

20 ml der erhaltenen Sulfonatlösung wurden im Trockenschrank zunächst zur Trockne eingedampft, der verbliebene Feststoff bei 150° C endgetrocknet und eine Elementaranalyse durchgeführt. Bezogen auf das jetzt vorliegende Organopolysiloxan, bestehend aus Einheiten

$$2SiO_2 \cdot SiO_{3/2}\text{-}(CH_2)_3\text{-}SO_3H$$

waren folgende Analysenwerte zu erwarten:

| | % C | % H | % Si | % S |
|---|---|---|---|---|
| Theorie: | 12,2 | 7,1 | 28,5 | 10,9 |
| Gefunden: | 11,6 | 7,9 | 27,6 | 10,2 |

Um die Löslichkeit des gebildeten Produktes zu demonstrieren, wurde der nach Durchführung der Elementaranalysen verbliebene Feststoff mit 20 ml Wasser versetzt. Nach einem 10-minütigen Erhitzen auf 60° C wurde wieder eine klare Lösung erhalten.

<u>Beispiel 4</u>

Ausgehend von 100 g (0,316 Mol) $S_4[(CH_2)_3SiO_{3/2}]_2$ wurden durch Umsetzung mit 338 g 35 %iger $H_2O_2$-Lösung analog zu Beispiel 3 1,0 l einer Lösung, welche ca. 0,6 Mol/l $Si(OH)_3\text{-}(CH_2)\text{-}SO_3H$ und ca. 0,6 Mol/l Schwefelsäure enthielt, gebildet (Oxidationsausbeute: ca. 95 %).

Die Bildung von Schwefelsäure neben der gebildeten sulfonierten Organosiliciumverbindung wurde quantitativ mittels Ionenchromatographie erfaßt.

<u>Beispiel 5</u>

100 g (0,302 Mol)

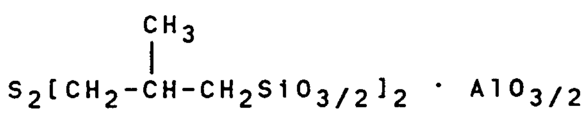

mit einer mittleren Korngröße von 40 µm wurden in 400 ml Wasser suspendiert. Die Suspension wurde auf 80° C aufgeheizt und unter kräftigem Rühren mit 755 ml einer 2 molaren wäßrigen Lösung von $H_2SO_5$ (Carosche Säure) versetzt. Anschließend wurde noch 5 Stunden bei 100° C gerührt und dann weiter wie nach Beispiel 3 verfahren. Die zunächst erhaltene klare Produktlösung wurde bei 20 mbar und 80° C auf genau 500 ml eingeengt. Gemäß Titration und ionenchromatographischer Untersuchung wies die erhaltene Lösung einen Gehalt an 0,5

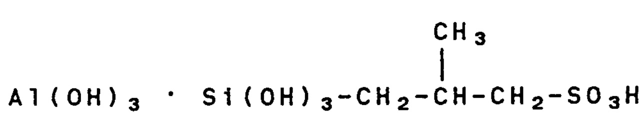

von 1,15 Mol/l auf (Oxidationsausbeute: 95 %).

<u>Beispiel 6</u>

50 g (0,127 Mol)

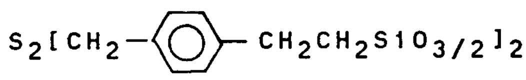

in 200 ml Wasser wurden analog zu Beispiel 3 mit 62 g (0,64 Mol) 35 %iger Wasserstoffperoxid umgesetzt. Während der Umsetzung wurde durch eine pH-gesteuerte Dosierung von 0,1 n Natronlauge der pH-Wert der Suspension im Bereich von 5 bis 7 gehalten.

Die erhaltene Lösung wurde auf eine Menge von genau 1,0 l eingestellt. Den Ergebnissen einer elementaranalytischen Untersuchung eines Eindampf- und Trockungsrückstandes zufolge war die Lösung 0,233 molar an

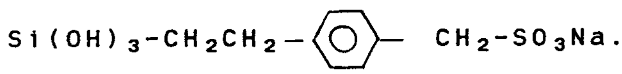

Oxidationsausbeute: 92 %.

Analyse des getrockneten Produktes (s. Beispiel 3), bezogen auf die Zusammensetzung

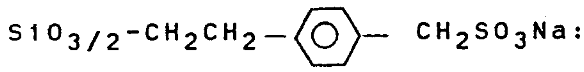

| | % C | % H | % Si | % S | % Na |
|---|---|---|---|---|---|
| Theorie: | 39,6 | 3,7 | 10,3 | 11,7 | 8,4 |
| Gefunden: | 38,9 | 4,0 | 9,7 | 10,9 | 8,1 |

**Patentansprüche**

1. Verfahren zur Herstellung von 0,01 bis 70 Gew.-%igen wäßrigen Lösungen sulfonierter Organosiliciumverbindungen der Formel

$$[(HO)_3Si\text{-}R^1\text{-}SO_3^-]_x M^{x+} \quad (I)$$

bzw. über Sauerstoffbrücken kondensierter oligomerer Siloxanderivate davon, wobei
$R^1$ eine lineare oder verzweigte Alkylengruppe mit 1 bis 12 C-Atomen, eine Cycloalkylengruppe mit 5 bis 8 C-Atomen oder eine Einheit der allgemeinen Formel

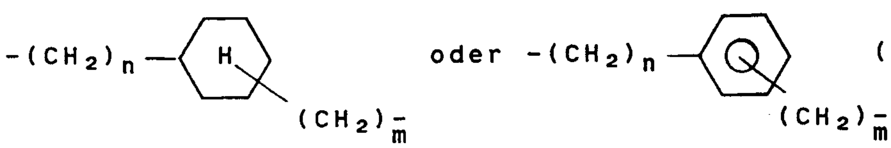
oder
(II)

darstellt, in der n bzw. m eine Zahl von 0 bis 6 ist und die Zahl der silicium- bzw. schwefelständigen Methylengruppen angibt,
M gleich $H^+$ oder gegebenenfalls auch $NH_4^+$ oder ein Metallion mit einer Wertigkeit von x gleich 1 bis 4 ist,
und in der Lösung gegebenenfalls noch Verbindungen der Formel

$$Si(OH)_4,\ R'Si(OH)_3,\ R'_2\,Si(OH)_2 \text{ und/oder } Al(OH)_3,\ R'Al(OH)_2 \quad (III)$$

oder über Sauerstoffbrücken kondensierte Derivate davon enthalten sind, wobei R' eine Methyl- oder Ethylgruppe

ist und das Verhältnis von Si-Atomen aus Einheiten der Formel (I) zu der Summe der Si- und/oder Al-Atome aus Einheiten der Formel (III) 1 : 0 bis 1 : 3 und die Gesamtkonzentration der Verbindungen (I) plus (III) 0,01 bis 70 Gew.-% beträgt,
**dadurch gekennzeichnet,**
daß man eine polymere Di-, Tri- oder Tetrasulfanverbindung aus Einheiten der allgemeinen Formel

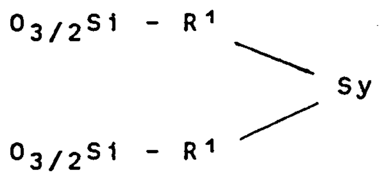

(IV)

in welcher $R^1$ jeweils gleich oder verschieden sein kann und dieselbe Bedeutung wie in Formel (I) hat, y gleich 2,3,4 ist, und die freien Valenzen der an das Siliciumatom gebundenen Sauerstoffatome durch die Siliciumatome weiterer Gruppen der Formel (IV) und/oder durch die Metallatomsauerstoffgruppen der vernetzenden Brückenglieder

$$SiO_{4/2},\ R'SiO_{3/2},\ R'_2\ SiO_{2/2}\ \text{und/oder}\ AlO_{3/2},\ R'AlO_{2/2} \qquad (V)$$

abgesättigt sind, wobei R' dieselbe Bedeutung wie in Formel (III) hat und das Verhältnis von Si-Atomen aus Einheiten der Formel (IV) zu der Summe der Si- und/oder Al-Atome aus Einheiten der Formel (V) 1 : 0 bis 1 : 3 beträgt, in einer Konzentration von 0,1 bis 50 Gew.-% in Wasser suspendiert, die Suspension bei 10 bis 100° C während 2 bis 20 Stunden mit der zur Überführung der Sulfanverbindung gemäß Formel (IV) in die Sulfonverbindung stöchiometrisch erforderlichen Menge Wasserstoffperoxid in Form einer 1- bis 70 Gew.-%igen Lösung versetzt, die Suspension bis zu 60 Stunden bei 30 bis 150° C und bis zu weiteren 60 Stunden bei 100 bis 150° C bei Normaldruck oder einem Überdruck, welcher der Summe der Partialdrucke der Komponenten der Mischung bei der jeweiligen Temperatur entspricht, rührt, bis eine weitgehend klare Lösung entstanden ist und gegebenenfalls vorhandenes überschüssiges Wasserstoffperoxid zersetzt ist, dann die Lösung abkühlt und gegebenenfalls mit Ammoniak, einem Amin, einem wasserlöslichen Metalloxid, -hydroxid, -hydrogencarbonat oder -carbonat oder wäßrigen Lösungen davon neutralisiert, anschließend gegebenenfalls vorhandene unlösliche Bestandteile durch Filtrieren oder Zentrifugieren abtrennt und mit Wasser wäscht und dann in der mit der Waschflüssigkeit vereinigten Produktlösung durch Verdünnen mit Wasser oder durch Aufkonzentration die gewünschte Produktkonzentration einstellt.

2. Verfahren zur Herstellung der wäßrigen Lösungen von sulfonierten Organosiliciumverbindungen der Formel

$$[(HO)_3Si\text{-}(CH_2)_3\text{-}SO_3^-]_x M^{x+}$$

bzw. ihrer oligomerischen Derivate gemäß Anspruch 1,
**dadurch gekennzeichnet,**
daß als Ausgangsmaterial polymere Di-, Tri- oder Tetrasulfan-Verbindungen, bestehend aus Einheiten der Formel

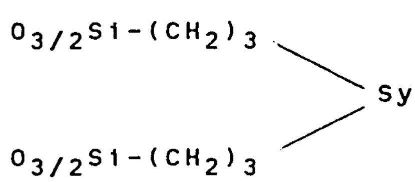

eingesetzt werden.

3. Verfahren zur Herstellung der wäßrigen Lösungen sulfonierter Organosiliciumverbindungen der Formel (I) von Anspruch 1 gemäß Anspruch 1 oder 2,
**dadurch gekennzeichnet,**
daß als Ausgangsmaterial ein polymeres Disulfan der Formel

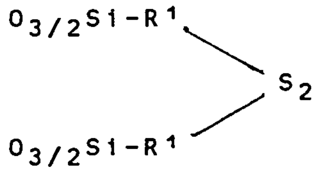

eingesetzt wird, wobei $R^1$ dieselbe Bedeutung wie in Formel (IV) von Anspruch 1 hat.

**4.** Verfahren zur Herstellung der wäßrigen Lösungen sulfonierter Organosiliciumverbindungen der Formel

$$[(HO)_3Si\text{-}(CH_2)_3\text{-}SO_3^-]_xM^{x+}$$

gemäß den Ansprüchen 1 bis 3,
**dadurch gekennzeichnet,**
daß als Ausgangsmaterial ein polymeres Disulfan der Formel

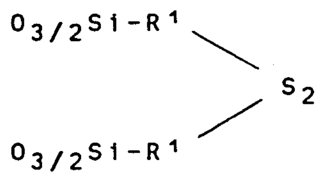

eingesetzt wird.

**5.** Verfahren zur Herstellung der wäßrigen Lösungen sulfonierter Organosiliciumverbindungen der Formel (I) von Anspruch 1 gemäß den Ansprüchen 1 bis 4,
**dadurch gekennzeichnet**
daß das zu oxidierende Polysiloxan der Formel (IV) von Anspruch 1 in Wasser mit einem pH-Wert von 3 bis 9 suspendiert wird.

**6.** Verfahren zur Herstellung der wäßrigen Lösungen sulfonierter Organosiliciumverbindungen der Formel (I) von Anspruch 1, in denen M ein Metallion mit einer Wertigkeit von x gleich 1 bis 4 ist, gemäß den Ansprüchen 1 bis 5,
**dadurch gekennzeichnet,**
daß der pH-Wert der Suspension während der Oxidation durch Zusatz von Ammoniak, Amin, wasserlöslichem Metalloxid, -hydroxid, -hydrogencarbonat, -carbonat oder wäßrigen Lösungen davon, im Bereich von 3 bis 9 gehalten wird.

**7.** Verfahren zur Herstellung der wäßrigen Lösungen sulfonierter Organosiliciumverbindungen der Formel (I) von Anspruch 1 gemäß den Ansprüchen 1 bis 6,
**dadurch gekennzeichnet,**
daß das zu oxidierende schwefelhaltige Polysiloxan der Formel (IV) von Anspruch 1 vor Beginn der Oxidation mit einer Konzentration von 10 bis 35 Gew.-% in Wasser suspendiert wird.

**8.** Verfahren zur Herstellung der wäßrigen Lösungen sulfonierter Organosiliciumverbindungen der Formel (I) von Anspruch 1 gemäß den Ansprüchen 1 bis 7,
**dadurch gekennzeichnet,**
daß die Oxidation des schwefelhaltigen Polysiloxans mit ca. 35 Gew.-%igem Wasserstoffperoxid durchgeführt wird.

**9.** Verfahren gemäß Anspruch 1 bis 8,
**dadurch gekennzeichnet,**
daß zur Oxidation eine, bezogen auf die Umwandlung aller im Ausgangspolysiloxan vorhandenen Schwefelatome in Sulfonat- und gegebenenfalls Sulfateinheiten, stöchiometrische bis zu 10 Mol % Überschuß betragende Menge

Wasserstoffperoxid eingesetzt wird.

10. Verfahren zur Herstellung von wäßrigen Lösungen sulfonierter Organosiliciumverbindungen der Formel (I) gemäß Anspruch 1 bis 7,
**dadurch gekennzeichnet,**
daß anstelle von Wasserstoffperoxid eine gegebenenfalls in situ gebildete organische oder anorganische Persäure oder Brom-Wasser, gegebenenfalls in Salzform, verwendet wird.

11. Verfahren zur Herstellung von wäßrigen Lösungen sulfonierter Organosiliciumverbindungen der Formel (I) von Anspruch 1 gemäß den Ansprüchen 1 bis 9,
**dadurch gekennzeichnet,**
daß das zu oxidierende Polysiloxansulfan der Formel (IV) von Anspruch 1 unmittelbar vor seiner Oxidation in situ hergestellt, durch Waschen mit Wasser von herstellungsbedingten Nebenprodukten befreit und dann wasserfeucht oder zumindest ungetrocknet, der Oxidation unterworfen wird.

## Claims

1. Process for the production of 0.01 to 70 wt.% aqueous solutions of sulphonated organosilicon compounds of the formula

$$[(HO)_3Si\text{-}R^1\text{-}SO_3^-]_x M^{x+} \qquad (I)$$

or oligomeric siloxane derivatives thereof condensed via oxygen bridges, wherein
$R^1$ represents a linear or branched alkylene group containing 1 to 12 C atoms, a cycloalkylene group containing 5 to 8 C atoms or a unit of the general formula

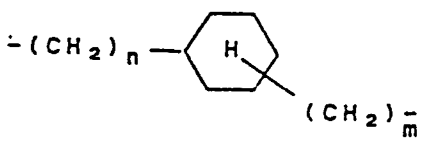 or 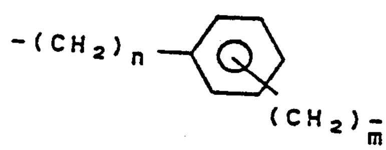 (II)

in which n or m is a number from 0 to 6 and states the number of methylene groups in silicon or sulphur position,
M equals $H^+$ or optionally also $NH_4^+$ or a metal ion having a valency of x equals 1 to 4,
and the solution optionally additionally contains compounds of the formula

$$Si(OH)_4,\ R'Si(OH)_3,\ R_2'Si(OH)_2 \text{ and/or } Al(OH)_3,\ R'Al(OH)_2 \qquad (III)$$

or derivatives thereof condensed via oxygen bridges, wherein R' is a methyl or ethyl group and the ratio of Si atoms from units of the formula (I) to the sum of Si and/or Al atoms from units of the formula (III) is 1:0 to 1:3 and the total concentration of compounds (I) plus (III) is 0.01 to 70 wt.%,
**characterised in that**
a polymeric di-, tri- or tetrasulphane compound prepared from units of the general formula

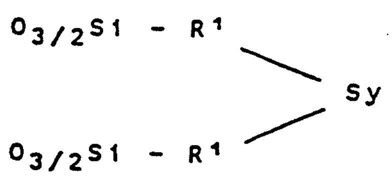 (IV)

in which $R^1$ may in each instance be identical or different and has the same meaning as in the formula (I), y equals 2, 3, 4, and the free valencies of the oxygen atoms attached to the silicon atom are saturated by the silicon atoms of further groups of the formula (IV) and/or by the metal atom oxygen groups of the crosslinking bridging members

$$SiO_{4/2},\ R'SiO_{3/2},\ R_2'SiO_{2/2} \text{ and/or } AlO_{3/2},\ R'\ AlO_{2/2} \qquad (V)$$

wherein R' has the same meaning as in the formula (III) and the ratio of Si atoms from units of the formula (IV) to the sum of the Si and/or Al atoms from units of the formula (V) is 1:0 to 1:3, is suspended at a concentration of 0.1 to 50 wt.% in water, the suspension is combined for 2 to 20 hours at 10 to 100°C with the quantity of hydrogen peroxide in the form of a 1-70 wt.% solution which is required stoichiometrically to convert the sulphane compound according to the formula (IV) into the sulphone compound, the suspension is stirred for up to 60 hours at 30 to 150°C and for up to a further 60 hours at 100 to 150°C at standard pressure or an overpressure corresponding to the sum of the partial pressures of the components of the mixture at the particular temperature, until a largely clear solution has been obtained and any optionally present excess hydrogen peroxide has been decomposed, then the solution is cooled and optionally neutralised with ammonia, an amine, a water-soluble metal oxide, hydroxide, hydrogen carbonate or carbonate or aqueous solutions thereof, then any optionally present insoluble constituents are separated by filtration or centrifugation and washed with water and the desired product concentration is then established in the product solution, which has been combined with the washing liquid, by dilution with water or by concentration.

2. Process for the production of the aqueous solutions of sulphonated organosilicon compounds of the formula $[(HO)_3Si(CH_2)_3\text{-}SO_3^-]_xM^{x+}$ or the oligomeric derivatives thereof according to claim 1,
**characterised in that**
the starting material used comprises polymeric di-, tri- or tetrasulphane compounds consisting of units of the formula

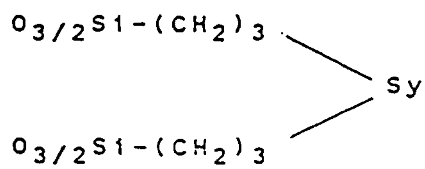

3. Process for the production of the aqueous solutions of sulphonated organosilicon compounds of the formula (I) of claim 1 according to claim 1 or 2,
**characterised in that**
the starting material used comprises a polymeric disulphane of the formula

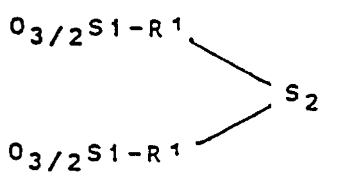

wherein $R^1$ has the same meaning as in the formula (IV) of claim 1.

4. Process for the production of the aqueous solutions of sulphonated organosilicon compounds of the formula

$$[(HO)_3Si(CH_2)_3\text{-}SO_3^-]_xM^{x+}$$

according to claims 1 to 3,
**characterised in that**
the starting material used comprises a polymeric disulphane of the formula

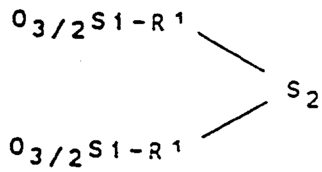

5. Process for the production of the aqueous solutions of sulphonated organosilicon compounds of the formula (I) of claim 1 according to claims 1 to 4,
**characterised in that**
the polysiloxane to be oxidised of the formula (IV) of claim 1 is suspended in water having a pH value of 3 to 9.

6. Process for the production of the aqueous solutions of sulphonated organosilicon compounds of the formula (I) of claim 1 in which M is a metal ion having a valency of x equals 1 to 4, according to claims 1 to 5,
**characterised in that**
the pH value of the suspension is maintained within the range from 3 to 9 during oxidation by the addition of ammonia, amine, water-soluble metal oxide, hydroxide, hydrogen carbonate, carbonate or aqueous solutions thereof.

7. Process for the production of the aqueous solutions of sulphonated organosilicon compounds of the formula (I) of claim 1 according to claims 1 to 6,
**characterised in that,**
before the beginning of oxidation, the polysiloxane containing sulphur to be oxidised of the formula (IV) of claim 1 is suspended in water at a concentration of 10 to 35 wt.%.

8. Process for the production of the aqueous solutions of sulphonated organosilicon compounds of the formula (I) of claim 1 according to claims 1 to 7,
**characterised in that**
oxidation of the polysiloxane containing sulphur is performed with approx. 35 wt.% hydrogen peroxide.

9. Process according to claims 1 to 8,
**characterised in that**
oxidation is performed using a quantity of hydrogen peroxide amounting to a stoichiometric excess of up to 10 mol.% relative to the conversion of all the sulphur atoms present in the starting polysiloxane into sulphonate and optionally sulphate units.

10. Process for the production of aqueous solutions of sulphonated organosilicon compounds of the formula (I) according to claims 1 to 7,
**characterised in that,**
an organic or inorganic per acid, optionally formed *in situ,* or bromine water, optionally in salt form, is used instead of hydrogen peroxide.

11. Process for the production of aqueous solutions of sulphonated organosilicon compounds of the formula (I) of claim 1 according to claims 1 to 9,
**characterised in that**
the polysiloxane to be oxidised of the formula (IV) of claim 1 is produced *in situ* immediately before the oxidation thereof, is freed of secondary products arising from production by washing with water and then, while moist with water or at least undried, subjected to oxidation.

**Revendications**

1. Procédé pour la production de solutions aqueuses contenant 0,01 à 70 % en poids de composés organosiliciques sulfonés de formule

$$[(HO)_3Si\text{-}R^1\text{-}SO_3^-]_xM^{x+} \qquad (I)$$

Ou des dérivés de siloxane oligomères de ceux-ci, condensés via des ponts oxygène, dans laquelle $R^1$ est un groupe alkylène linéaire ou ramifié comportant 1 à 12 atomes de carbone, un groupe cycloalkylène comportant 5 à 8 atomes de carbone ou une unité de formule générale

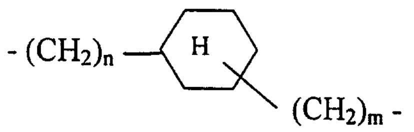

ou

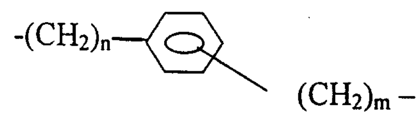

(II)

dans laquelle n ou m représentent un nombre de 0 à 6 et indiquent le nombre de groupes de méthylène sur le silicium ou le soufre,
M représente $H^+$ ou, le cas échéant également, du $NH_4^+$ ou un ion métallique d'une valence égale à x compris entre 1 et 4,
la solution contenant le cas échéant encore des composés de formule

$$Si(OH)_4,\ R'Si(OH)_3\ ,\ R'_2Si(OH)_2 \text{ et/ou } Al(OH)_3\ R'Al(OH)_2 \qquad (III)$$

ou des dérivés de ceux-ci condensés via des ponts oxygène, R' représentant un groupe méthyle ou éthyle et le rapport entre les atomes de Si des unités de formule (I) et la somme des atomes de Si et/ou de Al des unités de formule (III) étant compris entre 1 :0 et 1 :3 et la concentration totale des composés (I) plus (III) étant comprise entre 0,01 et 70 % en poids caractérisé en ce qu'on met en suspension, en une concentration de 0,1 à 50 % en poids un composé polymère disulfane trisulfane ou tétrasulfane constitué d'unités de formule générale

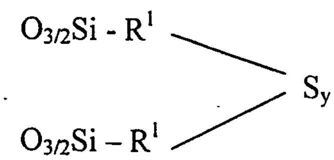

(IV)

dans laquelle $R^1$ peut être chaque fois identique ou différent et a la même signification que dans la formule (I), y est égal à 2, 3, 4 et les valences libres de l'atome d'oxygène lié à l'atome de silicium sont saturées par les atomes de silicium d'autres groupes de formule (IV) et/ou par les groupes de l'atome métallique contenant de l'oxygène des éléments de ponts de réticulation

$$SiO_{4/2},\ R'SiO_{3/2},\ R'_2SiO_{2/2} \text{ et/ou } AlO_{3/2},\ R'AlO_{2/2} \qquad (V)$$

R' ayant la même signification que dans la formule (III) et le rapport entre les atomes de Si des unités de formule (IV) et la somme des atomes de Si et/ou de Al des -unités de formule (V) étant compris entre 1 :0 et 1 :3, en ce qu'on ajoute à la suspension, entre 10 et 100 °C, pendant 2 à 20 heures, la quantité de peroxyde d'hydrogène, sous forme d'une solution de 1 à 70 % en poids, stoechiométriquement nécessaire pour la transformation du composé sulfane selon la formule (IV) en composé sulfone, en ce qu'on agite la suspension pendant un laps de temps allant jusqu'à 60 heures entre 30 et 150 °C puis pendant encore 60 heures entre 100 et 150 °C, sous la pression normale ou sous une surpression qui correspond à la somme des pressions partielles des composants du mélange à la température correspondante, jusqu'à ce qu'on obtienne une solution qui est, dans une large mesure, claire et que le peroxyde d'hydrogène éventuellement présent en excès soit décomposé, en ce qu'on refroidit ensuite la solution, en ce qu'on la neutralise le cas échéant avec de l'ammoniac, une amine, un oxyde métallique, un hydroxyde métallique, un hydrogénocarbonate métallique ou un carbonate métallique solubles dans l'eau ou des solutions aqueuses de ceux-ci, en ce qu'on sépare ensuite par filtration ou centrifugation les composants insolubles éventuellement présents et en ce qu'on lave avec de l'eau puis en ce qu'on règle la concentration désirée en produit dans la solution de produit, rassemblée avec le liquide de lavage, par dilution avec de l'eau ou par concentration.

2. Procédé pour la production de solutions aqueuses de composés organosiliciques sulfonés de formule

$$[\,(HO)_3Si\text{-}(CH_2)_3\text{-}SO_3^-\,]_x M^{x+}$$

ou de leurs dérivés oligomères selon la revendication 1, caractérisé en ce qu'on utilise comme matériau de départ des composés polymères disulfane, trisalfane ou tétrasulfane constitués par des unités de formule

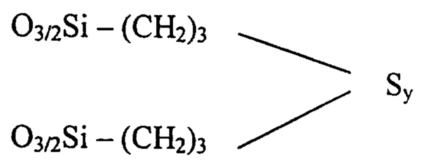

3. Procédé pour la production des solutions aqueuses de composés organosiliciques sulfonés de formule (I) de la revendication 1 selon la revendication 1 ou 2, caractérisé en qu'on utilise comme matériau de départ un disulfane polymère de formule

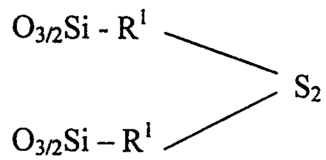

$R^1$ ayant la même signification que dans la formule (IV) de la revendication 1.

4. Procédé pour la production des solutions aqueuses de composés organosiliciques sulfonés de formule

$$[\,(HO)_3Si\text{-}(CH_2)_3\text{-}SO_3^-]_x M^{x+}$$

selon les revendications 1 à 3, caractérisé en ce qu'on utilise comme matériau de départ un disulfane polymère de formule

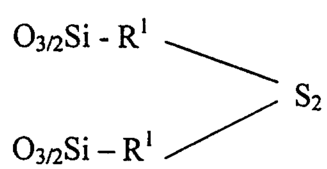

5. Procédé pour la production des solutions aqueuses de composés organosiliciques sulfonés de formule (I) de la revendication 1 selon les revendications 1 à 4, caractérisé en ce qu'on met en suspension le polysiloxane à oxyder de formule (IV) de la revendication 1 dans de l'eau à un pH compris entre 3 et 9.

6. Procédé pour la production des solutions aqueuses de composés organosiliciques sulfonés de formule (I) de la revendication 1, dans laquelle M est un ion métallique présentant une valence égale à x compris entre 1 et 4, selon les revendications 1 à 5, caractérisé en ce que le pH de la suspension pendant l'oxydation est maintenu dans une plage comprise entre 3 et 9 par addition d'ammoniac, d'une amine, d'un oxyde métallique, d'un hydroxyde métallique, d'un hydrogénocarbonate métallique ou d'un carbonate métallique solubles dans l'eau ou de solutions aqueuses de ceux-ci.

7. Procédé pour la production des solutions aqueuses de composés organosiliciques sulfonés de formule (I) de la

revendication 1 selon les revendications 1 à 6, caractérisé en ce qu'on met en suspension le polysiloxane contenant du soufre à oxyder de formule (IV) de la revendication 1, avant le début de l'oxydation, dans de l'eau en une concentration comprise entre 10 et 35 % en poids.

8. Procédé pour la production des solutions aqueuses de composés organosiliciques sulfonés de formule (I) de la revendication 1 selon les revendications 1 à 7, caractérisé en ce que l'oxydation du polysiloxane contenant du soufre est réalisée à l'aide de peroxyde d'hydrogène à environ 35 % en poids.

9. Procédé selon les revendications 1 à 8, caractérisé en ce qu'on utilise pour l'oxydation une quantité de peroxyde d'hydrogène comprise entre la quantité stoechiométrique et un excès de 10 % molaire par rapport à la quantité nécessaire pour la transformation de tous les atomes de soufre présents dans le polysiloxane de départ en unités sulfonate et, le cas échéant, unités sulfate.

10. Procédé pour la production de solutions aqueuses de composés organosiliciques sulfonés de formule (I) selon les revendications 1 à 7 caractérisé en ce qu'on utilise, au lieu de peroxyde d'hydrogène, un peracide ou de l'eau bromique organique ou inorganique, le cas échéant formé in ou sous forme de sel.

11. Procédé pour la production de solutions aqueuses de composés organosiliciques sulfonés de formule (I) de la revendication 1 selon les revendications 1 à 9, caractérisé en ce que le polysiloxanesulfane à oxyder de formule (IV) de la revendication 1 est fabriqué in situ, immédiatement avant son oxydation, en ce qu'on en élimine les produits secondaires inhérents à la production par lavage avec de l'eau et en ce qu'on le soumet à l'oxydation à l'état humide avec de l'eau ou au moins à l'état non séché.